# EUROPEAN PATENT APPLICATION

(11) **EP 4 528 598 A1**
(43) Date of publication of application: **26.03.2025**
(21) Application number: 23758205.1
(22) Date of filing: 31.03.2023
(51) Int. Cl.: G06N 3/10

(54) **COMPUTING PLATFORM, METHOD, AND APPARATUS FOR SPIKING NEURAL NETWORK LEARNING AND SIMULATION**

(30) Priority: 19.05.2022 CN 202210541154
(71) Applicant: Zhejiang Lab, Hangzhou City, Zheijiang Province 311121 (CN); Zhejiang University, Hangzhou, Zhejiang 310058 (CN)
(72) Inventor: ZHANG, Mengxiao, Zhejiang 311121 (CN); TANG, Huajin, Hangzhou Zhejiang 310058 (CN); HONG, Chaofei, Zhejiang 311121 (CN); WANG, Xiao, Zhejiang 311121 (CN); YUAN, Mengwen, Zhejiang 311121 (CN); LU, Yujing, Zhejiang 311121 (CN); ZHAO, Wenyi, Zhejiang 311121 (CN); PAN, Gang, Hangzhou Zhejiang 310058 (CN)
(74) Representative: Petraz, Gilberto Luigi
(86) International application number: PCT/CN2023/085709
(87) International publication number: WO 2023/221668

(57) **Abstract**

A computing platform (10), a method, and an apparatus (20) for spiking neural network (SNN) learning and simulation are provided. The computing platform (10) includes a neuron dynamics simulation module (11), a neuron conversion module (12), an SNN construction and weight learning module (13), and a neural network level parameter and weight access module (14). The neuron dynamics simulation module (11) simulates changing features of neurons. The neuron conversion module (12) performs operations on a calculation graph. The SNN construction and weight learning module (13) updates and iterates connection weights. The neural network level parameter and weight access module (14) stores overall network detail parameters.

## Description

### CROSS REFERENCE TO RELATED APPLICATIONS

This invention is a continuation of international patent application No. PCT/CN2023/085709, filed on March 31, 2023, which itself claims priority to Chinese Patent Application No. 202210541154.6, entitled "COMPUTING PLATFORM AND METHOD FOR SPIKING NEURAL NETWORK LEARNING AND SIMULATION" and filed on May 19, 2022, the entire content of which are incorporated herein by reference.

### TECHNICAL FIELD

The present invention relates to the field of neural network simulation technologies, and in particular, to a computing platform, a method, and an apparatus for spiking neural network (SNN) learning and simulation.

### BACKGROUND

A spiking neural network (SNN) is a research hotspot in the direction of neural networks in recent years, which is a third-generation artificial neural network (ANN) inspired by brain science. A trained SNN may be used in many fields such as mode recognition and image recognition. Compared with a conventional ANN, the SNN has strong biological characteristics, whose nodes are brain neurons that simulate organisms. After a spike stimulation is received, a neuron membrane voltage is accumulated, and when the membrane voltage exceeds a set threshold, spike signals may be excited and outputted. Due to the biological characteristics, the SNN has some differences in calculation from the conventional ANN, and calculation of node neurons has become a major feature during SNN learning. Secondly, some learning algorithms of the SNN, such as spike timing dependent plasticity (STDP), have strong biological features. Therefore, there is a big difference between the SNN and the conventional ANN in a calculation process.

The SNN enables brain scientists studying biology and artificial intelligence scientists studying computers to collaborate for the first time. However, today's computing platforms in the related art all have defects, and there are great obstacles to collaborative development.

First of all, for researchers studying biology, existing computing platforms for simulation can indeed reproduce various complex brain network structures and various dynamic phenomena of brain neurons. However, the existing computing platforms for simulation do not have characteristics of machine learning, and cannot learn parameters such as network weights according to input and output. As a result, these researchers are unable to conduct further research on brain-like intelligence.

Secondly, for researchers studying artificial intelligence, computing platforms for ANN in the related art are incapable of displaying biological characteristics, and can neither perform calculations at a neuron level nor perform physiological dynamics analysis on neurons. As a result, conventional ANN computing platforms cannot be directly used for SNN calculations.

### SUMMARY

According to various embodiments of the present invention, a computing platform for SNN learning and simulation is provided, including a neuron dynamics simulation module, a neuron conversion module, an SNN construction and weight learning module, and a neural network level parameter and weight access module.

The neuron dynamics simulation module is configured to simulate changing features of neurons according to current and/or voltage signals received by an SNN and states of neuron connections in each activity cycle.

The neuron conversion module is configured to convert a neuron model to obtain a superposition mode of basic calculations, transform a differential equation of neuron membrane voltage changes into a difference equation, expand calculation steps of the difference equation, form a calculation graph, and perform operations on the calculation graph.

The SNN construction and weight learning module is configured to update and iterate, in each activity cycle, connection weights through a built-in algorithm according to spike signals received by the SNN and the states of the neuron connections, for the SNN to learn features of an acquired object.

The neural network level parameter and weight access module is configured to store overall network detail parameters after the SNN is trained, for later use of the network or training again.

In an embodiment, an execution process of the neuron dynamics simulation module includes following steps:
step 1.1, selecting a neuron model; wherein different neuron models are selected for different levels according to a user's requirements, and the neuron models include: an Leaky Integrate and Fire (LIF) model, a Generalized Leaky Integrate and Fire (GLIF) model, an Adaptive Exponential Integrate and Fire (AEIF) model, a Hodgkin-Huxley (HH) model, and an izhikevich model;
step 1.2, selecting a synapse model, including an electrical synapse model or a chemical synapse model; wherein the electrical synapse model or the chemical synapse model is selected for different levels according to the synapse model selected by the user;
step 1.3, setting a current and/or voltage mode of a network input layer; wherein, according to a requirement of the user, the input layer received by the SNN may be set to constant current or voltage input, constant frequency current or voltage input, and current or voltage input that conforms to a law of sine wave variations;
step 1.4, setting a simulation time; wherein the SNN is run according to a time range set by the user; and
step 1.5, setting a monitor to monitor parameters of neurons.

The user may set a series of monitors to monitor various parameters of specified neurons, such as voltage changes over time, a spiking frequency, or various parameters of specific neurons, and display the parameters visually.

In an embodiment, in the neuron conversion module, the differential equation of neuron membrane voltage changes is transformed into the difference equation according to a Euler method and/or a Runge-Kutta method, the calculation steps of the difference equation are sequentially expanded into a calculation formula with only a single operator in each step, so as to obtain a calculation graph formed by single-step operations, and after the calculation graph is operated sequentially and/or in parallel, a result of the differential equation at this moment is obtained. An execution process includes following steps:
step 2.1, through finite difference, transforming a time-varying formula of the neuron model into a single-step iterative formula; and
step 2.2, transforming an operation including a natural constant into a coefficient parameter. Since fixed coefficients including natural constants and proportional to a time step are generally used for calculation, during iteration of operation, the coefficients with the natural constants generally do not change and may be directly transformed into fixed parameters.

In an embodiment, an execution process of the SNN construction and weight learning module includes following steps:
step 3.1, according to a requirement of the user, setting an SNN structure, and specifying a number of neurons and connection weights between connected neuron groups;
step 3.2,. selecting an algorithm, wherein the algorithm is selected when layers of the SNN are generated, including selecting whether to add a learning algorithm (such as an STCA algorithm or an STDP algorithm) and a weight update optimization algorithm to the network;
step 3.3, directly acquiring spike input, and/or converting input according to an acquired data type of the user;
step 3.4, running the SNN to simulate a process of neuron movement, and updating and iterating the connection weights according to the selected algorithm;
step 3.5, acquiring final spiking data, decoding spike output according to a decoding manner set by the user, and converting the decoded spike output into a required data form; and
step 3.6, storing a trained network structure and the weights according to a requirement of the user.

In an embodiment, in step 3.3, if the data type is numeric input, grayscale data is transcoded according to different encoding manners, and is converted into spiking data over a given time length.

In an embodiment, an execution process of step 3.6 includes following steps: step 3.6.1, decoding the network, acquiring network level parameters required to rebuild the network by parsing the network structure, recursively decoding components in the network that are labeled as a network base class (i.e., neuron groups also labeled as "network"), and then generating, according to a network level structure, a corresponding empty dictionary for storing parameters;
step 3.6.2, decoding the neurons in the network, parsing parameters required to generate the neurons, which include types of the neurons, a number of the neurons, node names of the neurons, node positions of the neurons, and storing the parameters in a network structure dictionary;
step 3.6.3, decoding synaptic connections in the network, parsing parameters required to generate the synaptic connections inside the network, which include presynaptic neuron names and postsynaptic neuron names, synaptic types, and synaptic delays, and storing the parameters in the network structure dictionary; storing information of the connection weights to facilitate secondary training of the network and recording update information of the weights such as a backpropagation function when the synaptic connections are parsed; and storing the weight information directly in an additional storage format;
step 3.6.4, decoding an algorithm used by the network, recording different algorithms selected for different levels, such as a specific algorithm used and a scope of action, and storing parameters in the network structure dictionary; and
step 3.6.5, storing the network structure dictionary as a text file structure of 'yaml' or 'json' ('yaml' and 'json' are text files in different formats) according to the user's selection, and saving the text file structure to a hard disk for use by the user or secondary training.

When the network model is generated from data read from the hard disk, a parsing order is the same, but an encoding operation of storing the network structure into the network structure dictionary is reversed, i.e., network structure information included in the dictionary is parsed, and then the corresponding network model is generated. For example, when a neuron is stored, there is a need to store a type, a number, a node name, and a node position of the neuron. So, during model reading, there is a need to read such parameters of the neuron and rebuild a same neuron.

In an embodiment, a method for SNN learning and simulation is provided, including following steps:
step S1: judging whether there is a need to read a network structure from a file, and if yes, directly performing step S5 to construct a network after the network structure is read; and if not, building the network structure anew, setting a network running time, and performing step S2;
step S2: constructing an input layer, and adopting different processing manners for input data according to different input manners selected;
step S3: constructing a neuron layer in the form of neuron groups, defining a model used by each neuron group, a number of neurons included in the model, and specific model details, converting a differential equation of the neurons, and adding a difference equation obtained after conversion to a calculation graph;
step S4: constructing a connection layer, selecting a synapse type, initializing connection weights at the same time, integrating information required to be passed to post-synaptic neurons after connection weight calculation, and adding the integrated information to the calculation graph;
step S5: constructing a network, assigning IDs representing categories and parent classes to each neuron group and connection in sequence, and then generating a specific calculation graph based on the IDs; and
step S6: simulating operation of the network, the neurons changing with time and settings of a neuron model, performing step-by-step calculation according to the calculation graph, and storing a trained network structure and parameters. The learning algorithm is used to perform a gradient backpropagation operation according to operation of the neural network, and to update and learn network parameters in conjunction with an Adam optimization algorithm. A weight update step is added to a backend calculation graph when the network is constructed.

In an embodiment, when the input layer is constructed in step S2, if the input data is given spike data, the input data is directly used as spike input; if an encoding manner is given, the input data is encoded according to different encoding manners and then inputted; and otherwise, different constant input currents or quadrature input currents are constructed as input according to the input data.

In an embodiment, the synapse type in step S4 includes a chemical synapse and an electrical synapse, and calculation formulas of different synapse types are added to the connection layer to construct connections. In the case of the electrical synapse, an input current is transformed into an input current calculated according to the electrical synapse model and is add to the calculation graph.

In an embodiment, in step S6, adding a monitor to monitor parameters of specified neurons, displaying the parameters visually, and storing displayed information.

This embodiment further provides an apparatus for SNN learning and simulation, including a non-volatile memory, and one or more processors, wherein the memory stores a computer program, and the processor is configured to run the computer program to perform the method for SNN learning and simulation described above.

Details of one or more embodiments of the present invention are set forth in the following accompanying drawings and descriptions. Other features, objectives, and advantages of the present invention become obvious with reference to the specification, the accompanying drawings, and the claims.

### BRIEF DESCRIPTION OF THE DRAWINGS

In order to better describe and illustrate embodiments and/or examples of those inventions disclosed herein, reference may be made to one or more accompanying drawings. Additional details or examples used to describe the accompanying drawings should not be considered as limitations on the scope of any of the disclosed inventions, the presently described embodiments and/or examples, and the presently understood best mode of these inventions.
FIG. 1 is a schematic structural diagram of a computing platform for SNN learning and simulation according to one or more embodiments;
FIG. 2 is a schematic diagram of an execution process of a neuron dynamics simulation module according to one or more embodiments;
FIG. 3 is a schematic diagram of an execution process of an SNN construction and weight learning module according to one or more embodiments;
FIG. 4 is a schematic diagram of an execution process of a neural network level parameter and weight access module according to one or more embodiments;
FIG. 5 is a flowchart of a method according to one or more embodiments;
FIG. 6 is a schematic flowchart of a specific use manner according to one or more embodiments; and
FIG. 7 is a structural diagram of an apparatus according to one or more embodiments.

### DETAILED DESCRIPTION OF THE EMBODIMENTS

The technical solutions in embodiments of the present invention will be described clearly and completely below with reference to the accompanying drawings in the embodiments of the present invention. Apparently, the described embodiments are merely some of rather than all of the embodiments of the present invention. All other embodiments acquired by those of ordinary skill in the art without creative efforts based on the embodiments of the present invention shall fall within the protection scope of the present invention.

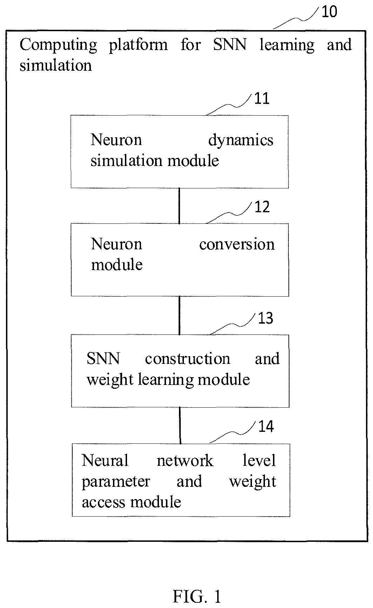

In order to solve the defects in the related art and achieve a purpose of improving physiological characteristics of an SNN, reducing a calculation cost of hardware, and improving versatility, the present invention adopts the following technical solutions. As shown in FIG. 1, a computing platform 10 for SNN learning and simulation is constructed in this embodiment, including a neuron dynamics simulation module 11, a neuron conversion module 12, an SNN construction and weight learning module 13, and a neural network level parameter and weight access module 14.

The neuron dynamics simulation module 11 is configured to simulate changing features of neurons according to current and/or voltage signals received by an SNN and states of neuron connections.

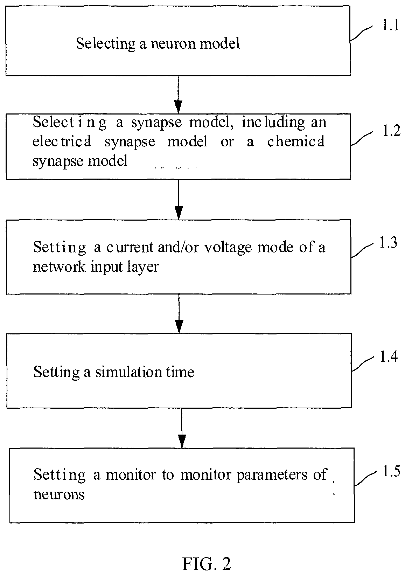

Specifically, in each activity cycle, the changing features of the neurons are simulated according to the current and/or voltage signals received by the SNN and specific states of the neuron connections in the SNN. An execution process thereof is shown in FIG. 2, including following steps:
step1.1, selecting a neuron model; wherein different neuron models may be selected for different levels according to user's requirements, and optional neuron models are an LIF model, a GLIF model, an AEIF model, an HH model, and an izhikevich model;
step 1.2, selecting a synapse model, including an electrical synapse model or a chemical synapse model; wherein the electrical synapse model or the chemical synapse model is selected for different levels according to the synapse model selected by the user;
step 1.3, setting a current and/or voltage mode of a network input layer; wherein, according to a requirement of the user, the input layer received by the SNN may be set to constant current or voltage input, constant frequency current or voltage input, and current or voltage input that conforms to a law of sine wave variations;
step 1.4, setting a simulation time; wherein the SNN is run according to a time range set by the user; and
step 1.5, setting a monitor to monitor parameters of neurons; wherein the user may set a series of monitors to monitor various parameters of specified neurons, such as voltage changes over time, a spiking frequency, or various parameters of specific neurons, and display the parameters visually.

The neuron conversion module 12 is configured to convert a neuron model to obtain a superposition mode of basic calculations, transform a differential equation of neuron membrane voltage changes into a difference equation, expand calculation steps of the difference equation, form a calculation graph, and perform operations on the calculation graph.

Specifically, the neuronal model is converted into a basic calculations step, and the computing platform transforms calculation of the differential equation of neuron membrane voltage changes into a calculation formula that only includes addition, subtraction, multiplication, and division operations iteratively over time, thereby reducing complexity of the calculation of the differential equation and reducing the cost of migrating an algorithm model to a hardware platform. An execution process thereof includes following steps:
step 2.1, through finite difference, transforming a time-varying formula of the neuron model into a single-step iterative formula; and
step 2.2, transforming an operation including a natural constant into a coefficient parameter. Since fixed coefficients including natural constants and proportional to a time step are generally used for calculation, during iteration of operation, the coefficients with the natural constants generally do not change and may be directly transformed into fixed parameters.

Since the calculation graph is only composed of most basic calculation symbols and names of parameters involved in the calculation, the calculation graph may be delivered to any calculation backend, such as a hardware chip for inference operation.

Since the parsing is in the form of a single-step differential equation, the complex differential equation originally required to be solved at each step becomes a relatively simple calculation graph for each iteration.

Since there is no sequence structure relationship between data required for certain calculations, parallelism may gain certain advantages in these calculation graphs.

Calculation problems of complex neurons originally difficult to implement on hardware may also be correspondingly solved numerically.

The SNN construction and weight learning module 13 is configured to update and iterate connection weights through a built-in algorithm according to spike signals received by the SNN and the states of the neuron connections, for the SNN to learn features of an acquired object.

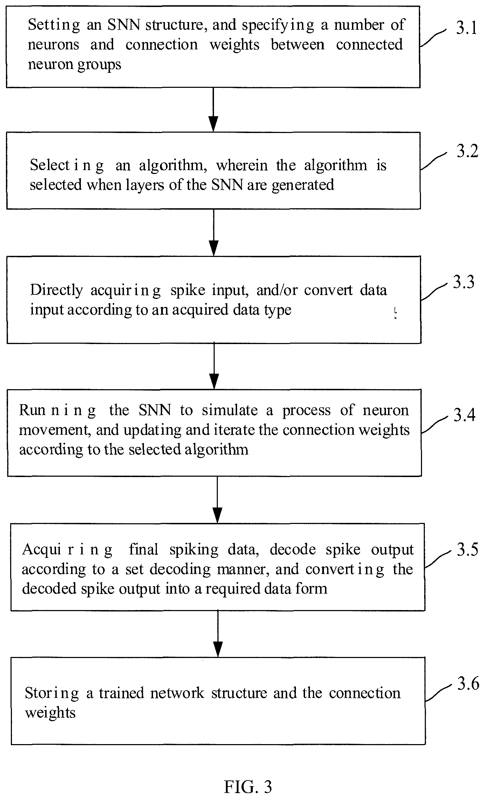

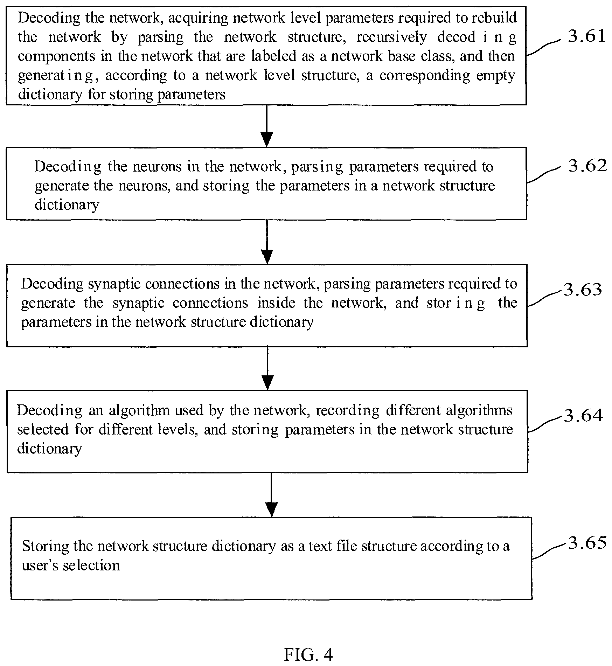

Specifically, in each activity cycle, the connection weights are updated and iterated through the built-in algorithm according to the spike signals received by the SNN and the specific states of the neuron connections, so that the network can learn features of a given object, so as to achieve an effect of SNN learning. An execution process is shown in FIG. 3, including following steps:
step 3.1, setting an SNN structure, and specifying a number of neurons and connection weights between connected neuron groups according to a requirement of the user;
step 3.2, selecting an algorithm, wherein the algorithm is selected when layers of the SNN are generated; wherein whether to add a learning algorithm (such as an STCA algorithm or an STDP algorithm) and a weight update optimization algorithm to the network may be selected;
step 3.3, directly acquiring spike input, and/or converting data input according to an acquired data type; wherein, according to the data type of the user, numerical input may be transformed into spike input in a continuous time period according to different encoding manners, or spike input given by the user may be directly received, for example, a Mixed National Institute of Standards and Technology database (MNIST) data set is numerical input, and grayscale data may be transcoded by Latency or Poisson encoding and converted into spiking data over a given time length;
step 3.4, running the SNN to simulate a process of neuron movement, and updating and iterating the connection weights according to the algorithm selected by the user;
step 3.5, acquiring final spiking data, decoding spike output according to a set decoding manner, and converting the decoded spike output into a required data form; and
step 3.6, storing a trained network structure and the connection weights; wherein, according to a requirement of the user, the trained network structure and the connection weights can be stored for use or retraining. As shown in FIG. 4, the following steps are included.

In step 3.6.1, the network is decoded, network level parameters required to rebuild the network are acquired by parsing the network structure, components in the network that are labeled as a network base class (i.e., neuron groups also labeled as "network") are recursively decoded, and then a corresponding empty dictionary is generated according to a network level structure, for storing parameters.

In step 3.6.2, the neurons in the network are decoded, parameters required to generate the neurons are parsed, which include types of the neurons, a number of the neurons, node names of the neurons, node positions of the neurons, and the parameters are stored in a network structure dictionary.

In step 3.6.3, synaptic connections in the network are decoded, parameters required to generate the synaptic connections inside the network, such as presynaptic neuron names and postsynaptic neuron names, synaptic types, and synaptic delays, are parsed, and the parameters are stored in the network structure dictionary.

When the synaptic connections are parsed, all information of the connection weights is stored for use by secondary training of the network, and update information of the connection weights such as a backpropagation function is required to be recorded. The information of the connection weights is stored directly in an additional storage format.

In step 3.6.4, an algorithm used by the network is decoded, different algorithms selected for different levels, such as a specific algorithm used and a scope of action, are recorded, and parameters are stored in the network structure dictionary.

In step 3.6.5, the network structure dictionary is specifically stored as a text file structure of 'yaml' or 'json' ('yaml' and 'json' are text files in different formats) according to a user's selection, and the text file structure is saved to a hard disk for use by the user or secondary training.

When the network is generated by reading data from the hard disk, a parsing order is the same. A difference is that the process of storing the network structure into the network structure dictionary is reversed, and the data in the network structure dictionary is read to reversely generate the network structure.

The neural network level parameter and weight access module 14 is configured to store overall network detail parameters after the SNN is trained, for later use of the network or training again.

The modules may operate independently or be used at the same time, so as to help researchers study changes in the neurons during learning and study whether certain specific changes in the neurons have learning effects, and it is easier to migrate to a hardware side after certain research results are achieved.

Compared with the related art, in the present invention, the network composed of different types of neurons and synaptic structures has more physiological characteristics and is closer to a human brain structure, which is more suitable for development of brain-like computing and simulation of brain neural networks. Secondly, splitting the neuron model into relatively basic mathematical calculation formulas is more suitable for conversion to the hardware side, the cost of algorithm migration is lower, and versatility of the algorithm is also higher. At the same time, with the two functions of SNN learning and neural network simulation close to physiological details, it is helpful for the user to observe and study dynamics of the neurons when studying the SNN.

The computing platform is developed in a Python language (a general-purpose high-level programming language), which exists as a Python library and may be deployed to any operating system terminal that supports Python, such as Windows, IOS, and UNIX-like operating systems, and the user uses the Python language for subsequent use.

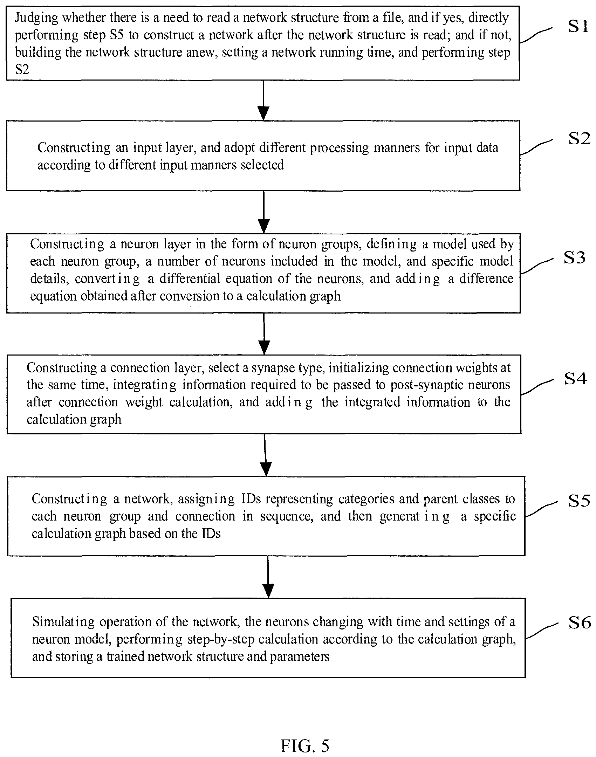

As shown in FIG. 5, a method for SNN learning and simulation includes following steps.

In step S1, it is judged whether there is a need to read a network structure from a file. If yes, step S5 is directly performed to construct a network after the network structure is read. If not, the network structure is built anew, a network running time is set, and step S2 is performed.

In step S2, an input layer is constructed, and different processing manners are adopted for input data according to different input manners selected. If the input data is given spike data, the input data is directly used as spike input. If an encoding manner is given, the input data is encoded according to different encoding manners and then inputted. Otherwise, different constant input currents or quadrature input currents are constructed as input according to the input data.

In step S3, a neuron layer is constructed in the form of neuron groups, a model used by each neuron group, a number of neurons included in the model, and specific model details are defined, a differential equation of the neurons is converted, and a difference equation obtained after conversion is added to a calculation graph.

In step S4, a connection layer is constructed, a synapse type is selected, connection weights are initialized at the same time, and information required to be passed to post-synaptic neurons after connection weight calculation is integrated and added to the calculation graph. The synapse type includes a chemical synapse and an electrical synapse, and calculation formulas of different synapse types are added to the connection layer to construct connections.

In step S5, a network is constructed, IDs representing categories and parent classes are assigned to each neuron group and connection in sequence, and then a specific calculation graph is generated based on the IDs.

In step S6, operation of the network is simulated, the neurons change with time and settings of a neuron model, step-by-step calculation is performed according to the calculation graph, and a trained network structure and parameters are stored. A monitor is added to monitor parameters of specified neurons, the parameters are displayed visually, and displayed information is stored.

An SNN construction and learning function and a neuron dynamics simulation function enable time-driven neuron simulation and weight update, the state of the neurons may be iteratively updated according to a set time step, and the connection weights may be updated according to a set algorithm to realize a learning function of the network, which can also help the user quickly construct the network and visualize network results. The platform is developed based on Python and may be deployed on any operating system terminal that supports Python. The user can use the Python language for subsequent use and development.

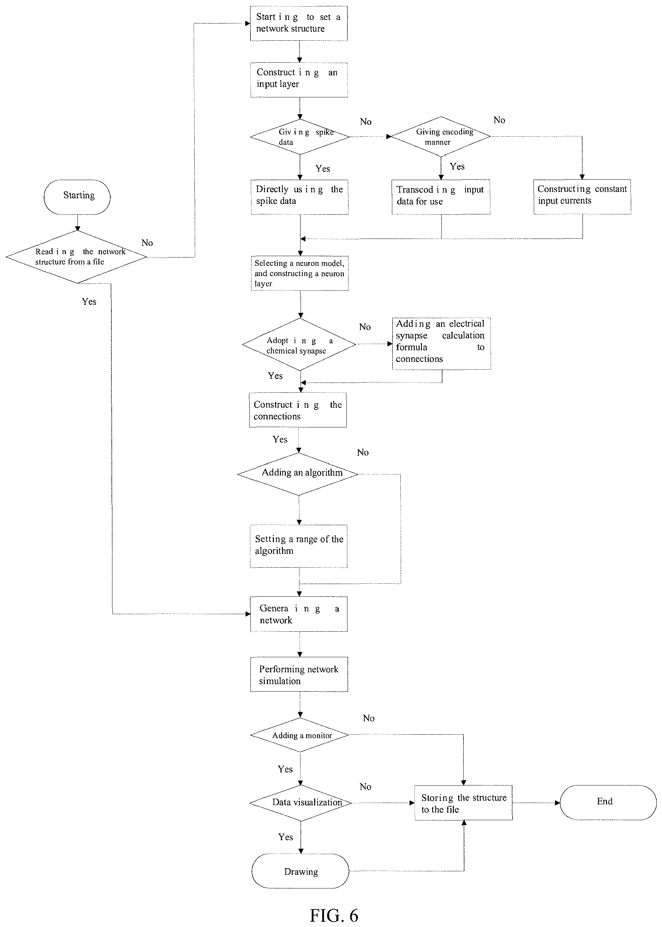

As shown in FIG. 6, a complete operation and use process according to embodiments of the present invention is as follows.

In an initial stage, it is first judged whether there is a need to read a network structure from a file, and if yes, a stage of network generation is directly entered after reading. If not, the network structure is built anew, and an overall network running time is set. When the MNIST data set is trained, 50 ms to 200 ms is generally used as a simulated network running time. In this embodiment, 200 ms is selected as the overall network running time, and 0.1 ms is the time step.

Firstly, the input layer is constructed, and different processing manners are adopted for input data according to different input manners selected by the user. The input data is directly used as spike input, the input data is encoded according to different encoding manners and then inputted, or different constant input currents or quadrature input currents are constructed according to the input data. In this embodiment, if the MNIST data set is trained, original grayscale numerical data in the data set may be transformed into spike input distributed on the overall running time according to, for example, Latency encoding.

Secondly, the neuron layer is constructed. The neuron layer is constructed in the form of neuron groups, the model used by each neuron group, the number of neurons included therein, and the specific model details are defined by the user, and a specific calculation formula obtained after neuron transformation is added to a backend calculation graph. At present, when the MNIST data set is trained, an LIF neuron or CLIF neuron model is generally used, and 100 neurons are set for a single layer, with a total of one training layer.

Next, the connection layer is constructed. Whether to choose a default chemical synapse as the synapse type is first considered. For the electrical synapse, the neuron model may be changed, and the input current is transformed into the input current calculated according to the electrical synapse model and added to the backend calculation graph. At the same time, the connection weights are initialized, and the information required to be passed to the post-synaptic neurons such as currents and voltages after connection weight calculation are integrated and added to the calculation graph. When the MNIST data set is trained, default randomly generated weight parameters may be selected.

Whether to use an algorithm given by the computing platform is considered. When the algorithm is not adopted, the connection weights may not change. However, when the operation is simulated, the neurons may still change with time according to the settings of the neuron model, and simulation and observation experiments of neuron dynamics can be performed. When the algorithm is used, for example, in this embodiment, the STCA learning algorithm may be used, an operation such as gradient backpropagation may be performed according to a network situation, and network parameters are updated and learned in conjunction with the Adam optimization algorithm.

After network structure parameters are set, the computing platform may start to construct the network.

IDs representing categories and parent classes are assigned to each neuron group and connection in sequence, and then the specific calculation graph is generated based on the IDs. When the learning algorithm is constructed, a weight update step may be added to the backend calculation graph.

After the network is constructed, simulation of the operation of the network starts, and the neurons start to change with time and model settings. That is, step-by-step calculation starts according to the calculation graph. In this embodiment, if 200 ms is used as the network running time and 0.1 ms is used as the time step, 2000 time steps are simulated.

If the monitor is added during the construction of the network, during the operation of the network, the monitor may continuously store monitored parameters and record changes thereof to the backend. In this embodiment, spiking of each neuron may be recorded. That is, an output signal of the neuron layer is recorded.

After the simulation of the operation, whether to draw a data visualization graph, such as a voltage variation graph or a spiking frequency graph, according to the data recorded in the monitor may be considered, for reference of experimental results.

Finally, the trained network structure and various parameters may be saved to a hard disk by using an access module, for migration to another device for use or secondary training.

According to the SNN constructed based on the computing platform of the present invention, for example, for image classification and recognition, in a training stage, firstly, feature extraction is performed on test set images with to-be-classified labels, extracted feature data is inputted to an input layer of the SNN, and the input layer encodes image data to obtain voltages/currents. Then, the voltages/currents are inputted to the neurons, and difference transformation is performed according to different differential equation formulas of the neurons, which are converted into a calculation graph in discrete difference forms. Since the calculation graph is superposition of difference forms, computing complexity is reduced, efficiency of parallel processing is improved, and it is also more conducive to allocation of computing units for the hardware. Then, through weight integral operation of a synaptic connection layer, all input currents of a neuron are multiplied by weights of the respective synaptic connections for accumulation to obtain a total input signal, which is then passed to the neuron. Finally, the whole model passes through an output layer and a decoding layer. The decoding layer may pass a spike signal of the output layer through a given decoding method, such as a spike cumulative decoding method, and count a number of spikes emitted by the output layer in a whole time window. A serial number of the neuron emitting the largest number of spikes is used as a prediction category to be compared with a real classification label. Through the algorithm, gradient backpropagation is performed, and the connection weights are updated. A to-be-classified image is inputted into the trained computing platform to obtain an image classification result. The computing platform is used to simulate the SNN, which has more functions and better performance than similar platforms, and is more conducive to research and development of brain-like networks than a conventional neural network platform.

In a network with 100 neurons in the input layer and Poisson input of 30 HZ, on a core test layer of the SNN, n (from 10,000 to 10 million) LIF neurons test a running speed. Each test model runs for 100 ms, and the time step dt is 1.0 ms. The model will run for 100 cycles, and the entire running time is counted in seconds (s), rounded to the second decimal place. All benchmark tests are run on a Ubuntu 18.04 LTS operating system and a workstation equipped with an Intel(R) Xeon(R) Gold 6230 CPU @2.10 GHz, 128 Gb RAM and a single Nvidia Quadro GV100 GPU (32 gb DRAM). Python 3.8 is used in all the tests. Usage of a video memory when used with a GPU is shown in Table 1.

**Table 1: Running schedule of the SNN in the present invention and the conventional neural network**

| | 10⁴ | 10⁵ | 10⁶ | 10⁷ |
|---|---|---|---|---|
| The present invention | 1.22 | 1.30 | 9.69 | 89.32 |
| SpikingJell y | 1.59 | 1.69 | 9.56 | 99.37 |
| BindsNet | 2.03 | 2.12 | 10.57 | 110.26 |
| Brainpy | 1.98 | 5.84 | 67.92 | Insufficient video memory |

SpikingJelly is an SNN deep learning framework, Brainpy is software for modeling and analysis of computational neuroscience learning, research, and brain-inspired algorithm development, of which 10 million cannot be tested due to insufficient video memory, and BindsNet is a framework for building an SNN implemented based on pytorch. The running time of the SNN realized based on the apparatus and the method of the present invention is significantly less than that of other conventional neural networks.

Corresponding to the foregoing embodiments of a method for SNN learning and simulation, the present invention further provides embodiments of an apparatus for SNN learning and simulation.

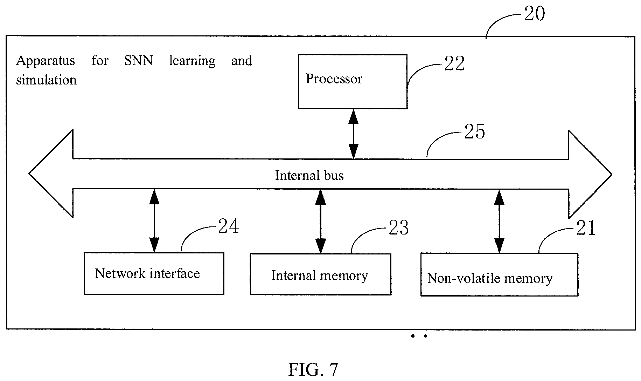

Referring to FIG. 7, embodiments of the present invention provide an apparatus 20 for SNN learning and simulation, including one or more processors 22 configured to implement the method for SNN learning and simulation in the above embodiments.

The embodiments of the apparatus for SNN learning and simulation provided in the present invention may be applied to any device with a data processing capability. The any device with the data processing capability may be a device or an apparatus such as a computer. The apparatus embodiment may be implemented by software, hardware, or a combination of hardware and software. Software implementation is used as an example. A logical apparatus is formed by reading a corresponding computer program instruction in a non-volatile memory 21 to an internal memory 23 by the processor 22 of the any device with the data processing capability where the apparatus is located. In terms of hardware, refer to FIG. 7 which is a structural diagram illustrating hardware of any device with a data processing capability where an apparatus for SNN learning and simulation apparatus is located according to the present invention. In addition to the processor 22, the internal memory 23, a network interface 24, and the non-volatile memory 21 shown in FIG. 7, the any device with the data processing capability where the apparatus is located in the embodiments may generally include other hardware based on actual functions of the any device with the data processing capability. Details are not described again.

In some embodiments, as shown in FIG. 7, the apparatus 20 for SNN learning and simulation may further include an internal bus 25. The processor 22, the non-volatile memory 21, the internal memory 23, and the network interface 24 are connected through the internal bus 25 and complete mutual communication.

For specific implementation processes of functions and roles of the units in the above apparatus, refer to the implementation processes of corresponding steps in the above method. Details are not described again.

Since the apparatus embodiment basically corresponds to the method embodiment, for relevant details, please refer to the description of the method embodiment. The apparatus embodiment described above is merely an example. The units described as separate parts may or may not be physically separate, and parts displayed as units may or may not be physical modules, may be located at one position, or may be distributed on a plurality of network modules. Some or all of the modules may be selected based on actual requirements to achieve the objectives of the solutions of the present invention. Those of ordinary skill in the art can understand and implement the present invention without creative efforts.

Embodiments of the present invention further provide a computer-readable storage medium, storing a program. When the program is executed by the processor 22, the method for SNN learning and simulation in the above embodiments is implemented.

The computer-readable storage medium may be an internal storage unit of the any device with the data processing capability in any one of the foregoing embodiments, such as a hard disk or an internal memory. The computer-readable storage medium may be an external storage device of the any device with the data processing capability, such as a plug-in hard disk, a smart media card (SMC), an SD card, or a flash card that is equipped on the device. Further, the computer-readable storage medium may include both an internal storage unit and an external storage device of the any device with the data processing capability. The computer-readable storage medium is configured to store the computer program and other programs and data required by the any device with the data processing capability, and may be further configured to temporarily store transmitted or to-be-transmitted data.

The technical features in the above embodiments may be randomly combined. For concise description, not all possible combinations of the technical features in the above embodiments are described. However, all the combinations of the technical features are to be considered as falling within the scope described in this specification provided that they do not conflict with each other.

The above embodiments only describe several implementations of the present invention, and their description is specific and detailed, but cannot therefore be understood as a limitation on the patent scope of the application. It should be noted that those of ordinary skill in the art may further make variations and improvements without departing from the conception of the present invention, and these all fall within the protection scope of the present invention. Therefore, the patent protection scope of the present invention should be subject to the appended claims.

## Claims

1. A computing platform for spiking neural network (SNN) learning and simulation, comprising a neuron dynamics simulation module, a neuron conversion module, an SNN construction and weight learning module, and a neural network level parameter and weight access module, wherein
the neuron dynamics simulation module is configured to simulate changing features of neurons according to current and/or voltage signals received by an SNN and states of neuron connections;
the neuron conversion module is configured to convert a neuron model to obtain a superposition mode of basic calculations, transform a differential equation of neuron membrane voltage changes into a difference equation, expand calculation steps of the difference equation, form a calculation graph, and perform operations on the calculation graph;
the SNN construction and weight learning module is configured to update and iterate connection weights through a built-in algorithm according to spike signals received by the SNN and the states of the neuron connections, for the SNN to learn features of an acquired object; and
the neural network level parameter and weight access module is configured to store overall network detail parameters after the SNN is trained.

2. The computing platform for SNN learning and simulation of claim 1, wherein an execution process of the neuron dynamics simulation module comprises following steps:
step 1.1, selecting a neuron model;
step 1.2, selecting a synapse model, comprising an electrical synapse model or a chemical synapse model;
step 1.3, setting a current and/or voltage mode of a network input layer;
step 1.4, setting a simulation time; and
step 1.5, setting a monitor to monitor parameters of neurons.

3. The computing platform for SNN learning and simulation of claim 1, wherein, in the neuron conversion module, the differential equation of neuron membrane voltage changes is transformed into the difference equation, the calculation steps of the difference equation are expanded into a calculation formula with only a single operator in each step, so as to obtain a calculation graph formed by single-step operations, after the calculation graph is operated sequentially and/or in parallel, a result of the differential equation at this moment is obtained, and an execution process comprises following steps:
step 2.1, through finite difference, transforming a time-varying formula of the neuron model into a single-step iterative formula; and
step 2.2, transforming an operation comprising a natural constant into a coefficient parameter.

4. The computing platform for SNN learning and simulation of claim 1, wherein an execution process of the SNN construction and weight learning module comprises following steps:
step 3.1, setting an SNN structure, and specifying a number of neurons and connection weights between connected neuron groups;
step 3.2, selecting an algorithm, wherein the algorithm is selected when layers of the SNN are generated;
step 3.3, directly acquiring spike input, and/or converting data input according to an acquired data type;
step 3.4, running the SNN to simulate a process of neuron movement, and updating and iterating the connection weights according to the selected algorithm;
step 3.5, acquiring final spiking data, decoding spike output according to a set decoding manner, and converting the decoded spike output into a required data form; and
step 3.6, storing a trained network structure and the connection weights.

5. The computing platform for SNN learning and simulation of claim 4, wherein, in step 3.3, if the data type is numeric input, grayscale data is transcoded according to different encoding manners, and is converted into spiking data over a given time length.

6. The coputing platform for SNN learning and simulation of claim 4, wherein an execution process of step 3.6 comprises following steps:
step 3.6.1, decoding the network, acquiring network level parameters required to rebuild the network by parsing the network structure, recursively decoding components in the network that are labeled as a network base class, and then generating, according to a network level structure, a corresponding empty dictionary for storing parameters;
step 3.6.2, decoding the neurons in the network, parsing parameters required to generate the neurons, and storing the parameters in a network structure dictionary;
step 3.6.3, decoding synaptic connections in the network, parsing parameters required to generate the synaptic connections inside the network, and storing the parameters in the network structure dictionary; and
storing information of the connection weights and recording update information of the connection weights when the synaptic connections are parsed;
step 3.6.4, decoding an algorithm used by the network, recording different algorithms selected for different levels, and storing parameters in the network structure dictionary; and
step 3.6.5, storing the network structure dictionary as a text file structure according to a user's selection.

7. A method for SNN learning and simulation, comprising following steps:
step S1: judging whether there is a need to read a network structure from a file, and if yes, directly performing step S5 to construct a network after the network structure is read; and if not, building the network structure anew, setting a network running time, and performing step S2;
step S2: constructing an input layer, and adopting different processing manners for input data according to different input manners selected;
step S3: constructing a neuron layer in the form of neuron groups, defining a model used by each neuron group, a number of neurons comprised in the model, and specific model details, converting a differential equation of the neurons, and adding a difference equation obtained after conversion to a calculation graph;
step S4: constructing a connection layer, selecting a synapse type, initializing connection weights at the same time, integrating information required to be passed to post-synaptic neurons after connection weight calculation, and adding the integrated information to the calculation graph;
step S5: constructing a network, assigning IDs representing categories and parent classes to each neuron group and connection in sequence, and then generating a specific calculation graph based on the IDs; and
step S6: simulating operation of the network, the neurons changing with time and settings of a neuron model, performing step-by-step calculation according to the calculation graph, and storing a trained network structure and parameters.

8. The method for SNN learning and simulation of claim 7, wherein, when the input layer is constructed in step S2, if the input data is given spike data, using the input data is directly as spike input; if an encoding manner is given, encoding the input data according to different encoding manners and then inputting the input data; and otherwise, constructing different constant input currents or quadrature input currents as input according to the input data.

9. The method for SNN learning and simulation of claim 7, wherein the synapse type in step S4 comprises a chemical synapse and an electrical synapse, and calculation formulas of different synapse types are added to the connection layer to construct connections.

10. The method for SNN learning and simulation of claim 7, wherein, in step S6, adding a monitor to monitor parameters of specified neurons, displaying the parameters visually, and storing displayed information.

11. An apparatus for SNN learning and simulation, comprising a non-volatile memory, and one or more processors, wherein the memory stores a computer program, and the processor is configured to run the computer program to perform the method for SNN learning and simulation of any one of claims 7 to 10.
